# EUROPEAN PATENT APPLICATION

(11) **EP 4 764 813 A1**
(43) Date of publication of application: **24.06.2026**
(21) Application number: 25222147.8
(22) Date of filing: 10.12.2025
(51) Int. Cl.: G06F 3/06

(54) **STORAGE SYSTEM, METHOD OF OPERATING STORAGE SYSTEM, AND STORAGE DEVICE**

(30) Priority: 19.12.2024 KR 20240191133
(71) Applicant: Samsung Electronics Co., Ltd., Suwon-si, Gyeonggi-do 16677 (KR)
(72) Inventor: PARK, Daejun, Suwon-si, Gyeonggi-do 16677 (KR); SONG, Yonggil, Suwon-si, Gyeonggi-do 16677 (KR)
(74) Representative: Kuhnen & Wacker Patent- und Rechtsanwaltsbüro PartG mbB

(57) **Abstract**

A storage system includes a storage device (200) having a zone corresponding to a predetermined number of consecutive logical block addresses, LBAs, and requiring sequential writing of data, and a host (100) configured to transmit a first write command including a first LBA and first write data to the storage device (200). When a mismatch occurs between the first LBA of the write command and a second LBA indicated by a write pointer of the zone, the storage device (200) writes the first write data to the zone at the second LBA and provides LBA change information including the first LBA and the second LBA to the host (100).

## Description

### BACKGROUND

The present disclosure relates to a storage system, a method of operating the storage system, and a storage device.

A host may write data in a memory of a storage device and read data from the memory. Certain hosts and storage devices are configured to operate under standards including Non-Volatile Memory Express (NVMe), Universal Flash Storage (UFS), or Zoned Block Commands (ZBC). A feature of these standards is their support for implementing a zoned namespace (ZNS).

### SUMMARY

One or more embodiments provide a storage system, a method of operating the storage system, and a storage device, each configured to effectively handle unaligned write errors that may occur when a zoned namespace (ZNS) is used.

According to one or more embodiments, a storage system includes a storage device comprising a zone corresponding to a predetermined number of consecutive logical block addresses (LBAs) and requiring sequential writing of data, and a host configured to transmit a first write command comprising a first LBA, among the predetermined number of LBAs, and first write data to the storage device. The storage device may be, based on a mismatch between the first LBA of the first write command and a second LBA indicated by a write pointer corresponding to the zone, configured to write the first write data to an area of the zone corresponding to the second LBA and provide LBA change information comprising the first LBA and the second LBA to the host.

The storage device may be, when a difference between the first LBA and the second LBA is within a predetermined range based on an I/O queue depth of the storage device, configured to write the first write data in the area of the zone corresponding to the second LBA and provide the LBA change information to the host.

The predetermined range may be determined based on a product of an I/O queue depth of the storage device and a maximum number of LBAs corresponding to a single I/O command.

The storage device may be, when the difference between the first LBA and the second LBA is outside the predetermined range, configured to transmit an unaligned write error message to the host without writing the first write data in the area of the zone corresponding to the second LBA.

The host may be configured to perform a read operation on the first write data based on the LBA change information.

The host may include a file system including an LBA allocation table and a device driver configured to control the storage device based on a request issued by the file system. The device driver may be configured to generate a redirection map, in which the first LBA and the second LBA are mapped, based on the LBA change information and transmit a first read command including the second LBA to the storage device based on the redirection map when a first read request including the first LBA is issued by the file system.

The redirection map may include a plurality of LBA pairs mapped to each other. The device driver may be configured to transmit a read command including a changed LBA to the storage device based on the redirection map when an LBA included in a read request issued by the file system is present in the redirection map, and transmit a read command including an LBA included in the read request to the storage device when the LBA included in the read request is not present in the redirection map.

The device driver may include a filter configured to output whether an LBA included in the read request is present in the redirection map when the LBA is input.

The host may be configured to integrate mapping information of the LBA pairs included in the redirection map into the LBA allocation table of the file system and delete the redirection map from the device driver.

According to one or more embodiments, there is provide a method of operating a storage system including a storage device and a host, wherein the storage device includes a zone corresponding to a predetermined number of consecutive logical block addresses (LBAs) and requiring sequential writing of data. The method may include transmitting, by the host, a first write command comprising a first LBA and first write data to the storage device, writing, by the storage device and based on a mismatch between the first LBA of the first write command and a second LBA indicated by a write pointer corresponding to the zone, the first write data in an area of the zone corresponding to the second LBA, and providing LBA change information comprising the first LBA and the second LBA to the host.

The writing of the first data may include determining whether a difference between the first LBA and the second LBA is within a predetermined range based on an I/O queue depth of the storage device and writing the first write data in the area of the zone corresponding to the second LBA when the difference is within the predetermined range.

The method may include transmitting an unaligned write error message to the host without writing the first write data in the area of the zone corresponding to the second LBA when the difference is outside the predetermined range.

The predetermined range may be determined based on a product of an I/O queue depth of the storage device and a maximum number of LBAs corresponding to a single I/O command.

The method may include performing, by the host, a read operation on the first write data based on the LBA change information.

The performing of the read operation may include generating, by a device driver of the host, a redirection map in which the first LBA and the second LBA are mapped, based on the LBA change information and transmitting, by the device driver of the host, a first read command comprising the second LBA to the storage device based on the redirection map when a first read request comprising the first LBA is issued by a file system of the host.

The method may include integrating mapping information, included in the redirection map, into an LBA allocation table of the file system and deleting the redirection map from the device driver.

According to one or more embodiments, a storage device includes a non-volatile memory including a zone corresponding to a predetermined number of consecutive logical block addresses (LBAs) and requiring sequential writing of data, and a memory controller configured to control the non-volatile memory. The memory controller may be configured to receive a first write command comprising a first LBA, among the predetermined number of LBAs, and first write data from a host, write the first write data in an area of the zone corresponding to the second LBA based on a mismatch between the first LBA of the first write command and a second LBA indicated by a write pointer corresponding to the zone, and provide LBA change information comprising the first LBA and the second LBA to the host.

The memory controller may be, when a difference between the first LBA and the second LBA is within a predetermined range based on an I/O queue depth of the storage device, configured to write the first write data in an area of the zone corresponding to the second LBA and provide the LBA change information to the host.

The memory controller may be, when the difference between the first LBA and the second LBA is outside the predetermined range, configured to transmit an unaligned write error message to the host without writing the first write data in the area of the zone corresponding to the second LBA.

The predetermined range may be determined based on a product of the I/O queue depth of the storage device and a maximum number of LBAs corresponding to a single I/O command.

### BRIEF DESCRIPTION OF DRAWINGS

FIG. 1 is a block diagram illustrating the configuration of a storage system according to one or more embodiments.
FIG. 2 is a diagram illustrating a zone according to one or more embodiments.
FIG. 3 is a diagram illustrating an example of an operation of writing data in a single zone of a storage device according to one or more embodiments.
FIG. 4 is a diagram illustrating an example of an operation of writing data in a single zone of a storage device according to one or more embodiments.
FIG. 5 is a diagram illustrating an example of LBA change information according to one or more embodiments.
FIG. 6A is a diagram illustrating a predetermined LBA range according to one or more embodiments.
FIG. 6B is a diagram illustrating a predetermined LBA range according to one or more embodiments.
FIG. 7A is a diagram illustrating a predetermined LBA range according to one or more embodiments.
FIG. 7B is a diagram illustrating a predetermined LBA range according to one or more embodiments.
FIG. 8 is a block diagram illustrating the configuration of a storage system according to one or more embodiments.
FIG. 9 is a flowchart illustrating a method of operating a storage system according to one or more embodiments.
FIG. 10 is a block diagram illustrating the configuration of a memory controller according to one or more embodiments.
FIG. 11 is a block diagram illustrating the configuration of a non-volatile memory according to one or more embodiments.
FIG. 12 is a flowchart illustrating a method of operating a storage device according to one or more embodiments.
FIG. 13 is a block diagram illustrating the configuration of a host according to one or more embodiments.
FIG. 14 is a flowchart illustrating the operation of a device driver according to one or more embodiments.
FIG. 15 is a process diagram illustrating a method of operating a storage system according to one or more embodiments.

### DETAILED DESCRIPTION

In the present disclosure, the terms such as "first" and "second" as used herein may modify various elements regardless of an order and/or importance of the corresponding elements, and do not limit the corresponding elements. These terms may be used for the purpose of distinguishing one element from another element.

Hereinafter, example embodiments will be described in detail to enable those skilled in the art to readily implement the present disclosure.

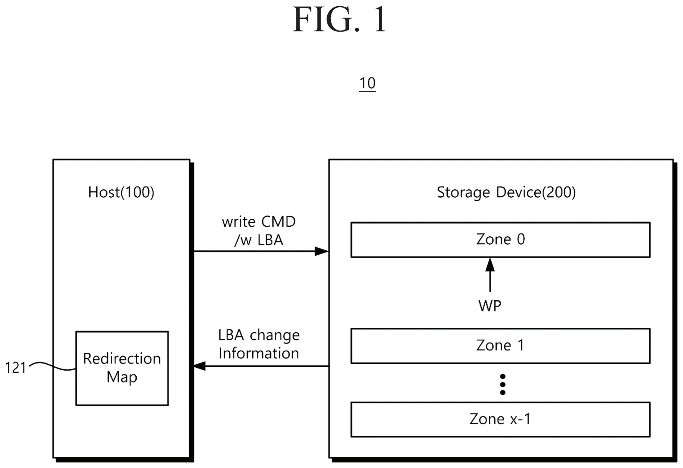

FIG. 1 is a block diagram illustrating the configuration of a storage system according to one or more embodiments. Referring to FIG. 1, a storage system 10 may include a host 100 and a storage device 200.

The storage system 10 may be implemented as, for example, a personal computer (PC), a data server, a network-attached storage, an Internet of Things (IoT) device, or a portable electronic device. The portable electronic device may include a laptop computer, a mobile phone, a smartphone, a tablet PC, a personal digital assistant (PDA), an enterprise digital assistant (EDA), a digital still camera, a digital video camera, an audio device, a portable multimedia player (PMP), a personal navigation device (PND), an MP3 player, a handheld game console, an e-book, a wearable device, or the like.

The host 100 may perform data management operations within the storage system 10. For example, the host 100 may provide a write command or a read command for data to the storage device 200, and the storage device 200 may write data or read data and provide the data to the host 100 based on the command received from the host 100. In addition, the storage device 200 may perform an erase operation on data in an area specified by the host 100 based on a data erase command provided by the host 100.

The storage device 200 may include one or more storage media. For example, the storage device 200 may include one or more hard disk drives (HDDs) or solid-state drives (SSDs). When the storage device 200 includes a solid-state drive (SSD), the storage device 200 may include a plurality of memory chips. For example, the storage device 200 may include a plurality of flash memory chips (for example, NAND memory chips) that store data non-volatilely. Alternatively, the storage device 200 may correspond to a single flash memory chip. Alternatively, the storage device 200 may correspond to a memory card including one or more flash memory chips.

According to certain embodiments, the storage system 10 may support a zoned namespace (ZNS). In ZNS, different areas of the storage device 200 may be grouped into zones, and the zones may support sequential writing of data according to the order of logical block addresses LBAs.

For example, storage media provided in the storage device 200 may include a plurality of zones Zone 0 to Zone x-1. Each of the plurality of zones Zone 0 to Zone x-1 may correspond to a predetermined number of consecutive logical block addresses LBAs. A size of each of the plurality of zones Zone 0 to Zone x-1, for example, the number of LBAs corresponding to each zone, may be the same or different according to embodiments.

Each of the plurality of zones Zone 0 to Zone x-1 may require sequential writing of data. For example, each of the plurality of zones Zone 0 to Zone x-1 may not store data randomly and may store data sequentially starting from an initial storage position of each zone. For example, when data is stored for the first time, each of the plurality of zones Zone 0 to Zone x-1 may be sequentially store data from the first storage position of the zone (for example, Zone Start Logical Block Address (ZSLBA)). In addition, when additional data is stored, each of the plurality of zones Zone 0 to Zone x-1 may store data sequentially starting from the storage position immediately following the last position at which data has been written.

To this end, the storage device 200 may manage a write pointer WP indicating the next position at which data is to be sequentially written. The write pointer WP may be managed for each active zone, among the plurality of zones Zone 0 to Zone x-1. In FIG. 1, only the write pointer WP for Zone 0, which is an active zone, is illustrated for clarity, but a write pointer WP may be present for each active zone.

For example, when write data intends to be written in Zone 0, the host 100 may transmit a write command to the storage device 200 including LBA (hereinafter referred to as a first LBA), among the LBAs corresponding to Zone 0, in which write data (hereinafter referred to as first write data) is to be written. Accordingly, the storage device 200 may check whether the first LBA included in the write command matches an LBA (hereinafter referred to as a second LBA) indicated by the write pointer WP.

When LBAs match each other, the storage device 200 may write first write data in an area of Zone 0 corresponding to the first LBA included in the write command. The host 100 may transmit a read command including the first LBA to the storage device 200 to perform a read operation on the first write data.

When LBAs do not match each other, for example, in the case of an unaligned write error, the storage device 200 may write the first write data based on the write pointer WP and provide LBA change information to the host 100, according to one or more embodiments. For example, when the first LBA included in the write command does not match the second LBA indicated by the write pointer WP, the storage device 200 may write the first write data in the area of Zone 0 corresponding to the second LBA without generating an unaligned write error message and provide (or transmit) LBA change information including the first LBA and the second LBA to the host 100.

In this case, the host 100 may perform a read operation on the first write data based on the LBA change information. For example, the LBA change information may include information indicating that the first LBA has been changed to the second LBA. Accordingly, the host 100 may recognize that the first write data has been stored in the area corresponding to the second LBA of the storage device 200, through the LBA change information. Thus, the host 100 may perform a read operation on the first write data by transmitting a read command including the second LBA to the storage device 200 based on the LBA change information. According to certain embodiments, the host 100 may generate a redirection map 121 based on the LBA change information. The redirection map 121 may include mapping information in which the first LBA and the second LBA are mapped. As a result, the host 100 may generate a read command including the second LBA, rather than the first LBA, based on the redirection map 121 and transmit the read command including the second LBA to the storage device 200 to read the first write data.

In typical technologies, when an unaligned write error occurs, a storage device does not write data and transmit an error message to a host. Accordingly, the host aborts the transmitted write command and retransmits the write command to handle the unaligned write error. This adds latency to the write command and increases interface overhead between the host and the storage device. In other typical technologies, when an unaligned write error occurs, a storage device writes data and stores and manages a related mapping table. Additional logic for LBA changes is required in the storage device, so that latency is added to read commands and allowance of LBA changes depends on resources of the storage device.

However, according to the above-described embodiments, when an unaligned write error occurs, the storage device 200 may write the data based on the write pointer WP, reducing latency for the write command and interface overhead between the host and the storage device. In addition, the storage device 200 may transmit LBA change information to the host 100, and the host 100 may generate and manage a redirection map 121 based on the LBA change information, eliminating the need for internal logic in the storage device to change LBAs, reducing read latency, and ensuring that LBA change allowance does not depend on the storage device's resources. As a result, the overhead for handling unaligned write errors may be reduced, and a storage system, a method of operating the storage system, and a storage device with improved performance may be provided.

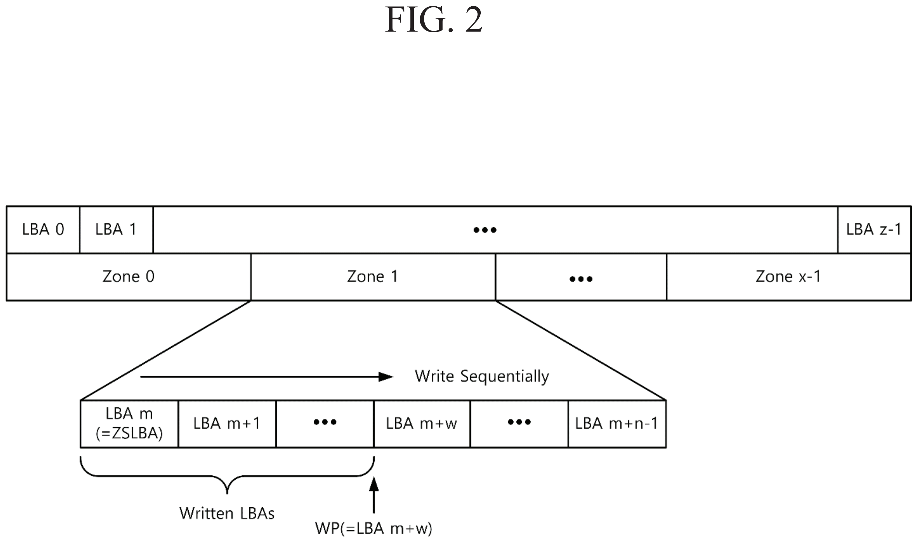

FIG. 2 is a diagram illustrating a zone according to one or more embodiments. Referring to FIG. 2, each of the plurality of zones Zone 0 to Zone x-1 may not overlap each other and may correspond to a predetermined number of consecutive LBAs. For example, Zone 1 may correspond to n consecutive LBAs from LBA m to LBA m+n-1.

Sizes of the plurality of zones Zone 0 to Zone x-1 may be determined independently. In certain embodiments, the plurality of zones Zone 0 to Zone x-1 may have the same size, and the plurality of zones Zone 0 to Zone x-1 may correspond to n non-overlapping LBAs, respectively. Alternatively, in certain embodiments, at least some of the plurality of zones (Zone 0 to Zone x-1) may differ in size from the other zones.

Data may be sequentially written in each of the plurality of zones Zone 0 to Zone x-1 according to the order of the LBAs corresponding to the zone. For example, in the case of Zone 1, data may be sequentially written from LBA m to LBA m+n-1. The write pointer WP may indicate the next position at which data is to be sequentially written. Therefore, the write pointer WP corresponding to Zone 1 may also sequentially point to the data write position, from LBA m to LBA m+n-1, as data is written. In the example illustrated in FIG. 2, the write pointer WP corresponding to Zone 1 may currently point to LBA m+w. As a result, data has already been written to the area of Zone 1 corresponding to LBA m to LBA m+w-1, and the next write data may be written in LBA m+w.

The above-described unaligned write error may occur when an I/O queue depth is 2 or greater. The term "I/O queue depth" may refer to the number of I/O commands that the host 100 can transmit to the storage device 200, even without receiving a response from the storage device 200. For example, when the I/O queue depth is 1, the host 100 may wait for a response from the storage device 200 for one transmitted write command and may transmit another write command to the storage device 200 after receiving the response. For example, when the I/O queue depth is 4, the host 100 may transmit four write commands to the storage device 200 at once. When the four write commands are transmitted to the storage device 200 in an order in which the LBA included in the write command matches the LBA indicated by the write pointer WP, no issue occurs. However, when the order in which the four write commands are transmitted to the storage device 200 is unintentionally changed, a situation corresponding to the above-described unaligned write error may occur.

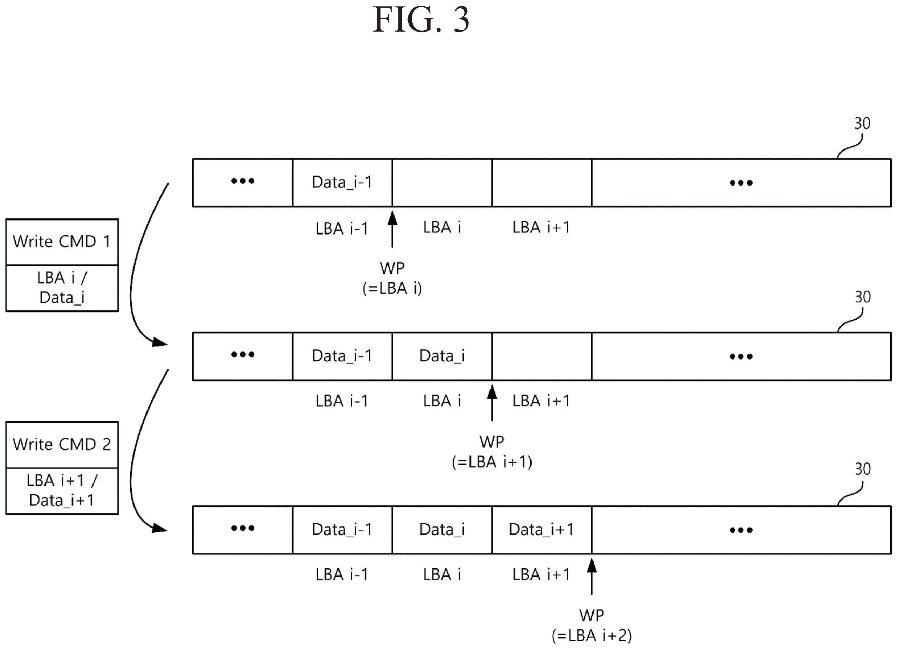

FIG. 3 is a diagram illustrating an example of an operation of writing data in a single zone of a storage device according to one or more embodiments. FIG. 3 illustrates a case in which the storage device receives write commands in the expected order as directed by a write pointer.

Referring to FIG. 3, Write Command 1 may be received from the host 100 by the storage device 200 while a write pointer WP of the zone 30 is pointing to LBA i. Write Command 1 involves wirting Data i in LBA i.

When Write Command 1 is received, the storage device 200 may check whether LBA included in Write Command 1 matches LBA indicated by the write pointer WP. Both LBAs match as 'i', the storage device 200 may write Data i in an area of the zone 30 corresponding to LBA i. Accordingly, the storage device 200 may change a position of the write pointer WP to point to the next write position LBA i+1.

Write Command 2 may be received from the host 100 by the storage device 200 while the write pointer WP of the zone 30 is pointing to LBA i+1. Write Command 2 involves writing Data i+1 in LBA i+1. Both the LBA included in Write Command 2 and the LBA indicated by the write pointer WP match as 'i+1', so that the storage device 200 may write Data i+1 in the area of the zone 30 corresponding to LBA i+1. As a result, the storage device 200 may change a position of the write pointer WP to point to the next write position LBA i+2.

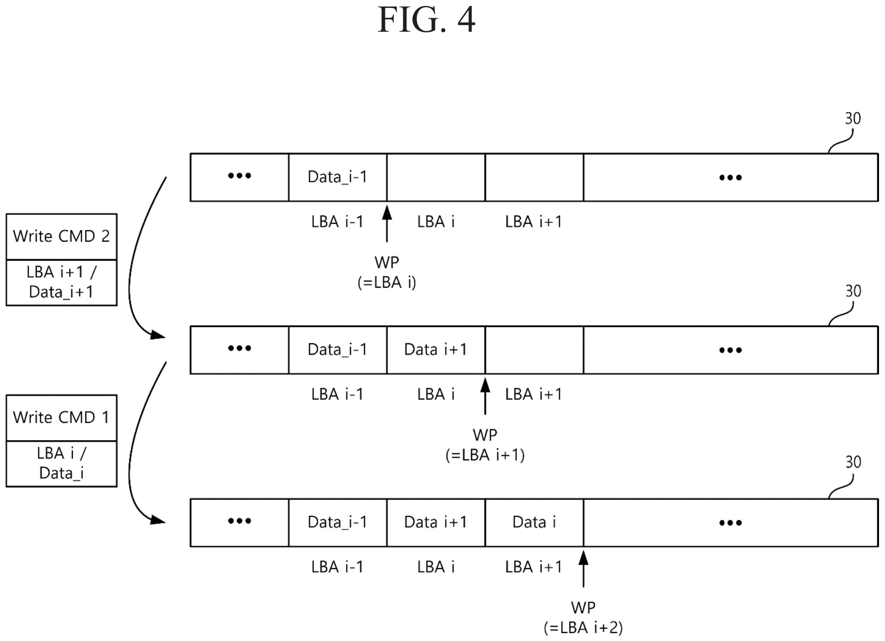

FIG. 4 is a diagram illustrating an example of an operation of writing data in a single zone of a storage device according to one or more embodiments. FIG. 4 illustrates a case in which the storage device receives write commands in an unexpected order as directed by a write pointer.

Referring to FIG. 4,Write Command 2 may be received first from the host 100 by the storage device 200 while the write pointer WP of the zone 30 is pointing to LBA i. Write Command 2 involves writing Data i+1 in LBA i+1.

When Write Command 2 is received, the storage device 200 may check whether the LBA included in Write Command 2 matches the LBA indicated by the write pointer WP. The LBA included in Write Command 2 is i+1, but the LBA indicated by the write pointer WP is i, so that the LBAs do not match.

In certain embodiments, the storage device 200 may write the write data based on the write pointer WP. For example, the storage device 200 may write Data i+1 corresponding to Write Command 2 in the area of the zone 30 corresponding to LBA i indicated by the write pointer WP.

The storage device 200 may provide LBA change information to the host 100. The LBA change information may include LBA i+1 included in Write Command 2 and LBA i indicated by the write pointer WP. For example, the LBA change information may be a mapping table in which LBA i+1 is mapped to LBA i, but embodiments are not limited thereto. The LBA change information may be configured in any format indicating that LBA i+1 included in Write Command 2 has been changed to LBA i indicated by the write pointer WP.

Data i+1 has been written in the area of the zone 30 corresponding to LBA i, so that the storage device 200 may change a position of the write pointer WP to point to the next write position LBA i+1.

In this case, Write Command 1 may be received from the host 100 by the storage device 200 while the write pointer WP of the zone 30 is pointing to LBA i+1. Write Command 1 involves writing Data i in LBA i.

In this case, the LBA i included in Write Command 1 and the LBA i+1 indicated by the write pointer WP may not match each other. Therefore, the storage device 200 may write Data i corresponding to Write Command 1 in the area of the zone 30 corresponding to LBA i+1 indicated by the write pointer WP. In addition, the storage device 200 may provide LBA change information to the host 100. The LBA change information may include LBA i included in Write Command 1 and LBA i+1 indicated by the write pointer WP, and may be configured in any format indicating that LBA i included in Write Command 1 has been changed to LBA i+1 indicated by the write pointer WP.

The storage device 200 may change the position of the write pointer WP to point to the next write position LBA i+2.

As described above, when a situation corresponding to an unaligned write error occurs, the storage device 200 according to one or more embodiments may write the write data based on the write pointer WP and provide LBA change information to the host 100.

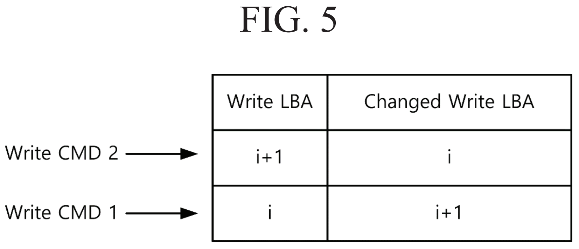

FIG. 5 is a diagram illustrating an example of LBA change information according to one or more embodiments. FIG. 5 illustrates the LBA change information generated in the example of FIG. 4, but examples of LBA change information are not limited thereto.

Referring to FIG. 5, the LBA change information may be configured in a form in which the write LBA included in the write command is mapped to the changed write LBA based on the write pointer WP. As described above in FIG. 4, when Write Command 2 is received, write LBA i+1 may be changed to LBA i indicated by the write pointer WP. As a result, the LBA change information generated by Write Command 2 may map the write LBA i+1 to the changed write LBA i.

As described above in FIG. 4, when Write Command 1 is received, the write LBA i is changed to the LBA i+1 designated by the write pointer WP. Accordingly, the LBA change information generated by Write Command 1 may map the write LBA i to the changed write LBA i+1.

A period at which LBA change information is provided to the host 100 may vary according to one or more embodiments. For example, the storage device 200 may provide the generated LBA change information to the host 100 whenever LBA change information is generated. Alternatively, the storage device 200 may provide LBA change information, generated by the number of I/O commands corresponding to the I/O queue depth, to the host 100 together.

In certain embodiments, when a situation corresponding to an unaligned write error occurs, for example, when the LBA included in the write command does not match the LBA indicated by the write pointer WP, the storage device 200 may determine whether the unaligned write error is an unintentional error by the host 100. When it is determined that the unaligned write error is an unintentional error, the storage device 200 may write the write data based on the write pointer WP and provide LBA change information to the host 100, as described above. When it is not determined that the unaligned write error is an unintentional error, the storage device 200 may transmit an unaligned write error message to the host 100.

To this end, the storage device 200 may determine whether a difference between the LBA included in the write command and the LBA indicated by the write pointer WP is within a predetermined range based on the I/O queue depth. In certain embodiments, when the difference between the LBA included in the write command and the LBA indicated by the write pointer WP is within a predetermined range based on the I/O queue depth, it may be determined that the unaligned write error is an unintentional error. In addition, when the difference between the LBA included in the write command and the LBA indicated by the write pointer WP is outside the predetermined range based on the I/O queue depth, it may not be determined that the unaligned write error is an unintentional error.

Accordingly, in certain embodiments, when a situation corresponding to an unaligned write error occurs and the difference between the LBA included in the write command and the LBA indicated by the write pointer WP is within a predetermined LBA range based on the I/O queue depth, the storage device 200 may write the write data based on the write pointer WP and provide LBA change information to the host 100, as described above. Even if an unaligned write error occurs, the storage device 200 may transmit an unaligned write error message to the host 100 when the difference between the LBA in the write command and the LBA indicated by the write pointer (WP) is outside the predetermined LBA range determined by the I/O queue depth.

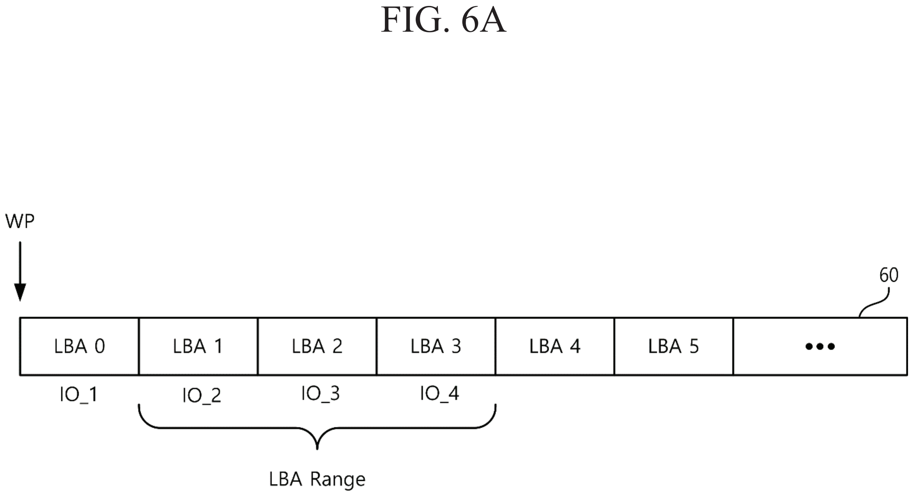

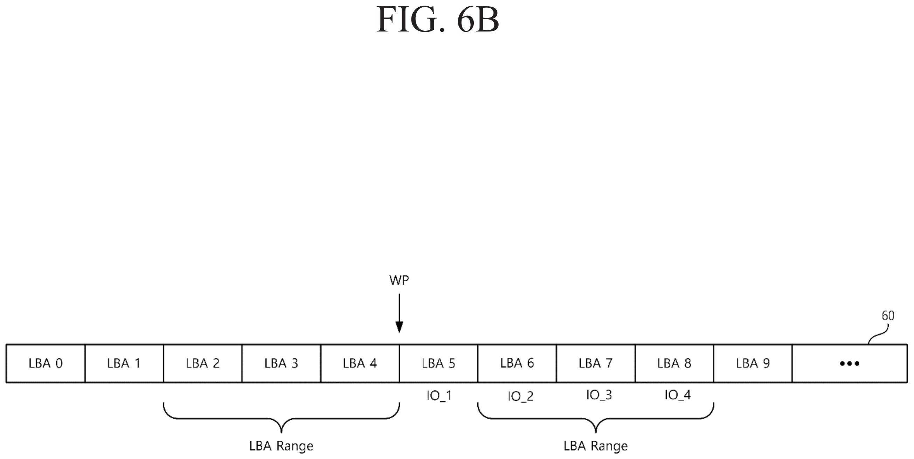

FIGS. 6A and 6B are diagrams illustrating a predetermined LBA range according to one or more embodiments. In FIGS. 6A and 6B, an example is provided in which an I/O queue depth is 4 and a size of write data corresponding to each of the four write commands IO_1 to IO_4 corresponds to a single LBA of the zone 60. However, embodiments are not limited thereto.

Referring to FIG. 6A, the current write pointer WP is pointing to LBA 0. Therefore, write data may be sequentially written starting from the area of the zone 60 corresponding to LBA 0. The I/O queue depth is 4, so that four write commands IO_1 to IO_4 may be transmitted from the host 100 to the storage device 200 without a response from the storage device 200.

For example, when LBAs included in the four write commands IO_1 to IO_4 are LBA 0 to LBA 3, respectively, a plurality of pieces of write data corresponding to IO_1 to IO_4 may be sequentially written to LBA 0 to LBA 3 of the zone 60.

However, when the LBA included in the currently received write command (for example, IO_1) is not 0, a situation corresponding to an unaligned write error occurs. The storage device 200 may determine whether a difference between the LBA included in IO_1 and the LBA indicated by the write pointer WP is within a predetermined LBA range, based on the I/O queue depth.

In certain embodiments, the predetermined LBA range may be the I/O queue depth. In the example of FIG. 6A, the I/O queue depth is 4, so that the predetermined LBA range may be (0, 4), where (0, 4) does not include 0 and 4, unlike [0, 4].

Accordingly, the storage device 200 may determine that an unintentional unaligned write error has occurred when the difference between the LBA included in IO_1 and the LBA indicated by the write pointer WP is within the range (0, 4). As a result, the storage device 200 may write the write data corresponding to IO_1 based on the write pointer WP and provide LBA change information to the host 100. For example, in FIG. 6a, the LBA indicated by the write pointer WP is 0, so that the storage device 200 may write the write data corresponding to IO_1 to LBA 0 of the zone 60 and provide LBA change information to the host 100 when the LBA included in IO_1 is 1, 2, or 3.

When the difference between the LBA included in IO_1 and the LBA indicated by the write pointer WP is outside the range (0, 4), for example, when the LBA included in IO_1 is 4 or greater, the storage device 200 may determine that the occurred unaligned write error is not an unintentional unaligned write error, and transmit an unaligned write error message to the host 100.

FIG. 6B illustrates a situation in which the write pointer WP corresponding to the zone 60 is currently pointing to LBA 5. For example, when the LBA included in the currently received write command (for example, IO_1) is not 5, a situation corresponding to an unaligned write error may occur.

The storage device 200 may determine whether the difference between the LBA included in IO_1 and the LBA indicated by the write pointer WP is within a predetermined LBA range, based on the I/O queue depth. Even in the example of FIG. 6B, when the same four write commands IO_1 to IO_4 as in FIG. 6A are received, the predetermined LBA range may be (0, 4).

Accordingly, the storage device 200 may determine that an unintentional unaligned write error has occurred when the difference between the LBA included in IO_1 and the LBA indicated by the write pointer WP is within the range (0, 4). For example, in FIG. 6B, the LBA indicated by the write pointer WP is 5, so that the storage device 200 may write the write data corresponding to IO_1 in LBA 5 of the zone 60 and provide LBA change information to the host 100 when the LBA included in IO_1 is 2, 3, 4, 6, 7, or 8.

When the difference between the LBA included in IO_1 and the LBA indicated by the write pointer WP is outside the range (0, 4), the storage device 200 may determine that the occurred unaligned write error is not an unintentional unaligned write error and transmit an unaligned write error message to the host 100.

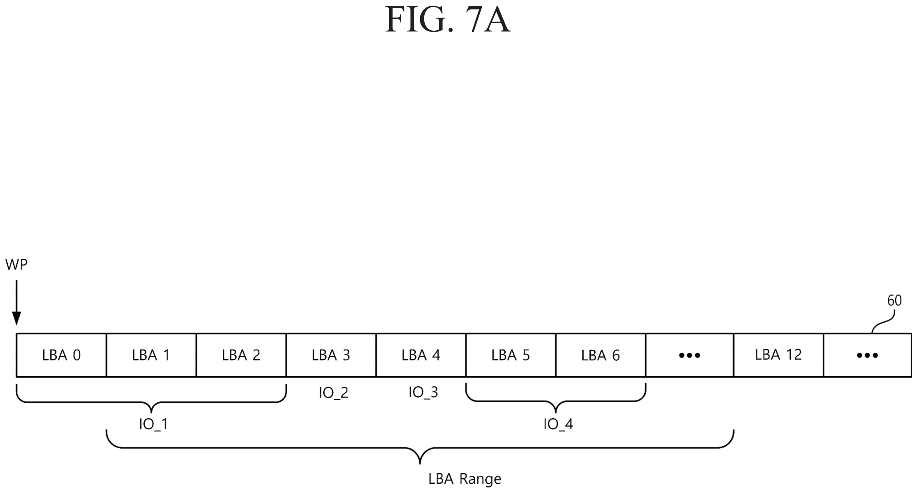

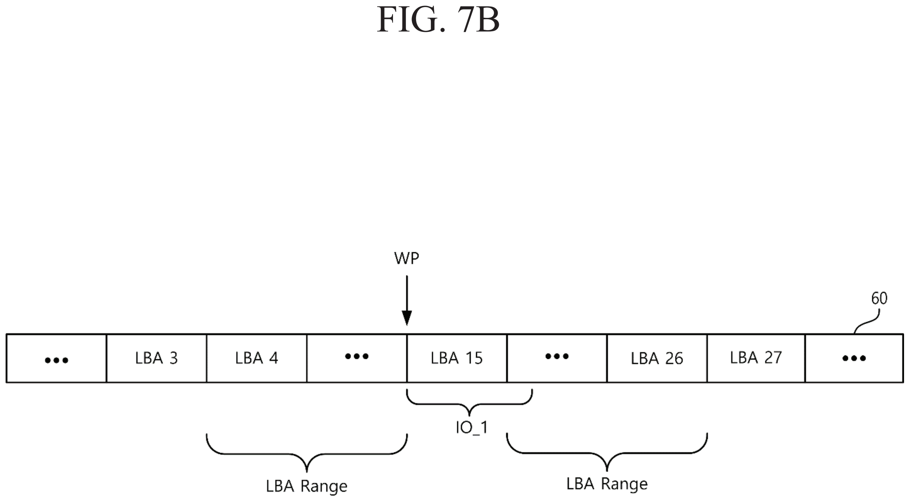

FIGS. 7A and 7B are diagrams illustrating a predetermined LBA range according to one or more embodiments. In FIGS. 7a and 7b, an example is provided in which an I/O queue depth is 4, but embodiments are not limited thereto.

In certain embodiments, write data may have a larger size than a single LBA of the zone 60. For example, referring to FIG. 7A, a size of write data corresponding to commands IO_2 and IO_3, among four write commands IO_1 to IO_4, may correspond to the single LBA of the zone 60. However, a size of the write data corresponding to IO_1 may correspond to three LBAs LBA 0, 1, and 2, and a size of the write data corresponding to IO_2 may correspond to two LBAs LBA 5 and 6.

In FIG. 7A, the write pointer WP is currently pointing to LBA 0. Therefore, write data may be sequentially written starting from the area of the zone 60 corresponding to LBA 0. An I/O queue depth is 4, so that four write commands IO_1 to IO_4 may be transmitted from the host 100 to the storage device 200 without a response from the storage device 200.

For example, when the LBAs included in IO_1 are 0, 1, and 2, the LBA included in IO_2 is 3, the LBA included in IO_3 is 4, and the LBAs included in IO_4 are 5 and 6, write data corresponding to IO_1 to IO_4 may be sequentially written to LBAs 0 to 6 of the zone 60.

However, when the LBA included in the currently received write command (for example, IO_1) is not 0, a situation corresponding to an unaligned write error may occur. The storage device 200 may determine whether a difference between the LBA included in IO_1 and the LBA indicated by the write pointer WP is within a predetermined LBA range, based on the I/O queue depth.

In certain embodiments, the predetermined LBA range may be determined based on the product of the I/O queue depth and the maximum number of LBAs corresponding to a single I/O command. In the example of FIG. 7A, the I/O queue depth is 4 and the maximum number of LBAs corresponding to a single I/O command is 3, so that the predetermined LBA range may be (0, 12), where (0, 12) does not include 0 and 12, unlike [0, 12].

Accordingly, the storage device 200 may determine that an unintentional unaligned write error has occurred when the difference between the LBA included in IO_1 and the LBA indicated by the write pointer WP is within the range (0, 12). As a result, the storage device 200 may write the write data corresponding to IO_1 based on a current position of the write pointer WP LBA 0 and provide LBA change information to the host 100.

When the difference between the LBA included in IO_1 and the LBA indicated by the write pointer WP is outside the range (0, 12), for example, when the LBA included in IO_1 is 12 or greater, the storage device 200 may determine that the occurred unaligned write error is not an unintentional unaligned write error and transmit an unaligned write error message to the host 100.

FIG. 7B illustrates a situation in which the write pointer WP corresponding to the zone 60 is currently pointing to LBA 15. For example, when the LBA included in the currently received write command (for example, IO_1) is not 15, a situation corresponding to an unaligned write error may occur.

The storage device 200 may determine whether the difference between the LBA included in IO_1 and the LBA indicated by the write pointer WP is within a predetermined LBA range determined based on the product of the I/O queue depth and the maximum number of LBAs corresponding to a single I/O command. Even in the example of FIG. 7B, when the same four write commands IO_1 to IO_4 as in FIG. 7A are received in the example of FIG. 7b, the predetermined LBA range may be (0, 12).

Accordingly, the storage device 200 may determine that an unintentional unaligned write error has occurred when the difference between the LBA included in IO_1 and the LBA indicated by the write pointer WP is within the range (0, 12). For example, in FIG. 7B, the LBA indicated by the write pointer WP is 15, so that the storage device 200 may sequentially write the write data corresponding to IO_1 starting from LBA 15 of the zone 60 and provide LBA change information to the host 100 when the LBAs included in IO_1 are within 4 to 14 or 16 to 26.

When the difference between the LBA included in IO_1 and the LBA indicated by the write pointer WP is outside the range (0, 12), the storage device 200 may determine that the occurred unaligned write error is not an unintentional unaligned write error and transmit an unaligned write error message to the host 100.

As described above, even if a situation corresponding to an unaligned write error occurs when the difference between the LBA included in the write command and the LBA indicated by the write pointer WP exceeds a predetermined LBA range based on the I/O queue depth, the storage device 200 may transmit an unaligned write error message to the host 100. In certain embodiments, the host 100 receiving the unaligned write error message may abort the transmitted write command and retransmit the write command, but embodiments are not limited thereto.

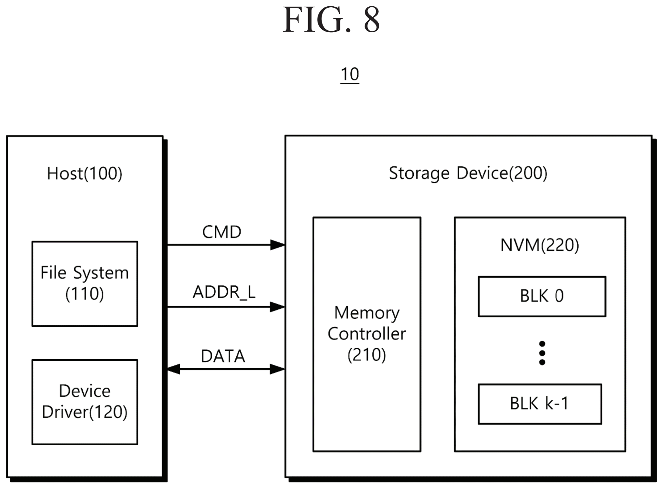

FIG. 8 is a block diagram illustrating the configuration of a storage system 10 according to one or more embodiments. The storage system 10 of FIG. 8 may be an implementation example of the storage system 10 of FIG. 1, but embodiments are not limited thereto.

Referring to FIG. 8, the storage system 10 may include a host 100 and a storage device 200. The host 100 may control the storage device 200. For example, the host 100 may provide a command CMD and a logical address ADDR_L to the storage device 200 to write data DATA to the storage device 200 or read data DATA stored in the storage device 200.

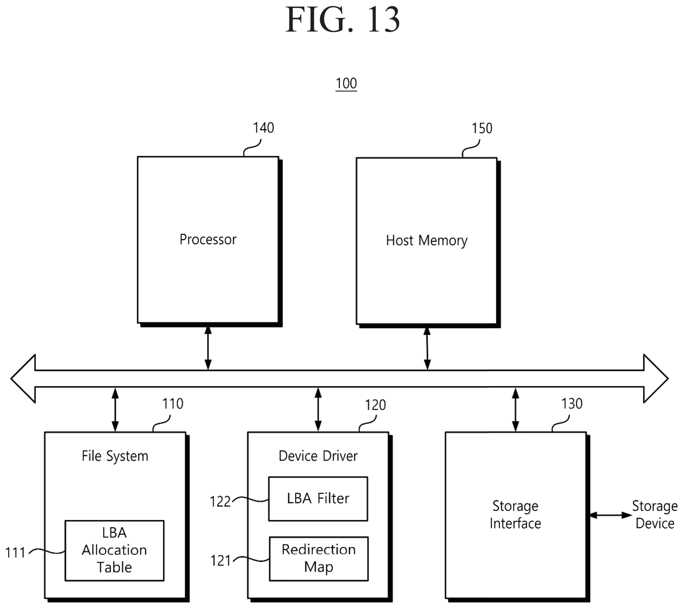

The host 100 may include a file system 110 and a device driver 120. The file system 110 may organize files or data when storing the files or data in the storage device 200. The file system 110 may manage file and folder structures for various memory components of the storage device 200 including a non-volatile memory (NVM) 220. The file system 110 may issue write requests or read requests to the device driver 120 to access the NVM 220. The file system 110 may provide a logical address (for example, LBA) corresponding to the write request or read request to the device driver 120. To this end, the file system 110 may include an LBA allocation table 111 (see FIG. 13). The LBA allocation table may indicate logical addresses allocated to files stored in the NVM 220. The file system 110 may be implemented through software or firmware.

The device driver 120 may control the storage device 200. The device driver 120 may modify a format of various requests and logical addresses issued by the file system 110 and transmit the various requests and logical addresses to the storage device 200. In addition, the device driver 120 may modify the format of data corresponding to various requests and transmit the data to the storage device 200. The device driver 120 may support a Zoned Namespace (ZNS) according to standards such as Non-Volatile Memory Express (NVMe), Universal Flash Storage (UFS), or Zoned Block Commands (ZBC). For example, the device driver 120 may generate a command CMD and a logical address ADDR_L to control the storage device 200 and transmit the generated command CMD and logical address ADDR_L to the storage device 200 in response to the requests and logical addresses issued by the file system 110.

In certain embodiments, the host 100 may perform a read operation based on LBA change information provided by the storage device 200. For example, when a situation corresponding to an unaligned write error occurs as in the example of FIG. 4, the host 100 may receive LBA change information illustrated in FIG. 5 from the storage device 200. As described above, the LBA change information may include mapping information between the LBA transmitted by the host 100 and the LBA changed based on the write pointer WP (for example, an LBA in which the write data was written). Accordingly, when performing a read operation on the write data later, the host 100 may accurately access a correct position in the storage device 200, in which the write data has been written, using the LBA change information. For example, the host 100 may transmit a read command including LBA i, instead of LBA i+1, to the storage device 200 based on the LBA change information to read Data i+1. Accordingly, the storage device 200 may read Data i+1 from a storage area corresponding to LBA i and provide the read Data i+1 to the host 100.

To this end, in certain embodiments, the device driver 120 may generate a redirection map 121 (see FIG. 1) based on the LBA change information provided by the storage device 200. The redirection map 121 may be a type of logical-to-logical (L2L) map including mapping information for changing the LBA, provided by the file system 110 based on the LBA allocation table, to the LBA changed based on the write pointer WP. The redirection map 121 may include pairs of LBAs mapped to each other. In each LBA pair, one of the two LBAs may be an LBA transmitted by the host 100 when a situation corresponding to an unaligned write error occurs, and the other may be the LBA changed based on the write pointer WP.

Accordingly, when a read request including an LBA based on the LBA allocation table is issued by the file system 110, the device driver 120 may check whether the LBA included in the issued read request is present in the redirection map 121. In certain embodiments, the device driver 120 may use a filter, such as a Bloom filter (see 122 of FIG. 13), which outputs whether an input LBA is present in the redirection map 121 to check whether the LBA included in the issued read request is present in the redirection map 121, but embodiments are not limited thereto.

When the LBA included in the read request issued by the file system 110 is present in the redirection map 121, the device driver 120 may change the LBA included in the read request of the file system 110 based on the redirection map 121 and transmit a read command including the changed LBA to the storage device 200. When the LBA included in the read request of the file system 110 is not present in the redirection map 121, the device driver 120 may transmit a read command including the LBA included in the read request of the file system 110 to the storage device 200.

In certain embodiments, the host 100 may integrate the redirection map 121 into the file system 110. For example, the host 100 may integrate the mapping information of the LBA pairs included in the redirection map 121 into the LBA allocation table of the file system 110. The LBA allocation table includes mapping information between files or data and allocated LBAs thereof, so that the redirection map 121, which is an L2L map, may be integrated into the LBA allocation table.

When the redirection map 121 is integrated into the file system 110, the device driver 120 may transmit a read command, including the LBA from the read request of the file system 110, directly to the storage device 200 without change. When the redirection map 121 is integrated into the file system 110, the redirection map 121 and/or the filter may be deleted from the device driver 120.

The storage device 200 may access the non-volatile memory 220 or perform requested operations in response to commands provided by the host 100.

The storage device 200 may be a flash memory device including at least one flash memory chip. In certain embodiments, the storage device 200 may be an embedded memory embedded in the storage system 10. For example, the storage device 200 may be an embedded multimedia card (eMMC) or an embedded universal flash storage (UFS) memory device. Alternatively, in certain embodiments, the storage device 200 may be an external memory, removable from the storage system 10. For example, the storage device 200 may be a UFS memory card, a compact flash (CF) card, a secure digital (SD) card, a micro secure digital (Micro-SD) card, a mini secure digital (Mini-SD) card, an extreme digital (xD) card, or a memory stick. However, embodiments are not limited thereto.

The storage device 200 may include a memory controller 210 and a non-volatile memory 220. The memory controller 210 may control the operations of the non-volatile memory 220. The memory controller 210 may receive a write command including an LBA from the host 100 and write data DATA in the non-volatile memory 220. In addition, the memory controller 210 may receive a read command including an LBA from the host 100, read data DATA stored in the non-volatile memory 220, and provide the read data to the host 100.

The memory controller 210 may support ZNS. The memory controller 210 may manage a plurality of zones in the non-volatile memory 220. As described above, each of the plurality of zones may require sequential writing of data. To this end, the memory controller 210 may manage a write pointer WP pointing to the next position in which data is to be sequentially written. The write pointer WP may be managed for each active zone, among the plurality of zones.

When a situation corresponding to an unaligned write error occurs, the memory controller 210 may write the write data in the area corresponding to the LBA indicated by the write pointer WP and provide LBA change information to the host 100.

In certain embodiments, the memory controller 210 may check whether a difference between the LBA included in the write command and the LBA indicated by the write pointer WP is within a predetermined range based on the I/O queue depth of the storage device 200. For example, the predetermined range may be determined based on the product of the I/O queue depth of the storage device and the maximum number of LBAs corresponding to a single I/O command, but embodiments are not limited thereto.

Accordingly, when the difference between the LBA included in the write command and the LBA indicated by the write pointer WP is within the predetermined range, the memory controller 210 may write the write data in the area corresponding to the LBA indicated by the write pointer WP and provide LBA change information to the host 100. When the difference between the LBA included in the write command and the LBA indicated by the write pointer WP is outside the predetermined range, the memory controller 210 may transmit an unaligned write error message to the host 100 without writing the write data in the area corresponding to the LBA indicated by the write pointer WP.

The non-volatile memory 220 may perform a write operation or a read operation under the control of the memory controller 210. The non-volatile memory 220 may include a plurality of memory blocks BLK0 to BLKk-1. Each memory block may include a plurality of pages. Each page may include a plurality of memory cells.

In certain embodiments, the non-volatile memory may include a plurality of flash memory cells. For example, the plurality of memory cells may be NAND flash memory cells. However, embodiments are not limited thereto, and the memory cells may be resistive memory cells such as resistive RAM (ReRAM) cells, phase change RAM (PRAM) cells, or magnetic RAM (MRAM) cells.

In certain embodiments, the non-volatile memory 220 may include a plurality of zones. Each of the plurality of zones may correspond to a predetermined number of consecutive logical block addresses LBAs and may require sequential writing of data. For example, the predetermined number of LBAs corresponding to each zone may be logically mapped to a predetermined number of memory blocks, but embodiments are not limited thereto. In certain embodiments, the predetermined number of LBAs may be logically mapped to a predetermined number of pages.

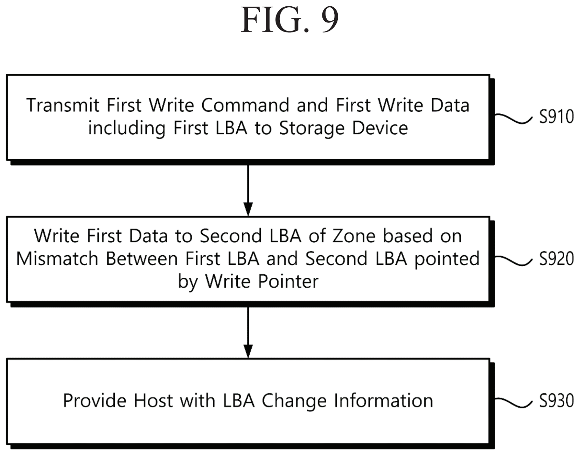

FIG. 9 is a flowchart illustrating a method of operating a storage system according to one or more embodiments. The storage system may correspond to the storage system 10 illustrated in FIG. 1 or FIG. 8. Accordingly, the storage system 10 may include a storage device 200 including a zone corresponding to a predetermined number of consecutive LBAs and requiring sequential writing of data, and a host 100 controlling the operation of the storage device. Redundant descriptions related to FIG. 9, overlapping the foregoing descriptions, will be omitted or simplified.

Referring to FIG. 9, in operation S910, the host 100 may transmit a first write command including a first LBA and first write data to the storage device 200. The first LBA may be a selected single LBA, among LBAs corresponding to one of a plurality of zones included in the storage device.

In operation S920, the storage device 200 may write the first write data to an area corresponding to a second LBA of the single zone based on a mismatch between the first LBA of the first write command and the second LBA indicated by a write pointer (WP) corresponding to the single zone.

In certain embodiments, the storage device 200 may determine whether the difference between the first LBA and the second LBA is within a predetermined range based on the I/O queue depth of the storage device 200. The predetermined range may be determined based on the product of the I/O queue depth of the storage device 200 and the maximum number of LBAs corresponding to a single I/O. Accordingly, when it is determined that the difference between the first LBA and the second LBA is within the predetermined range, the storage device 200 may write the first write data in the area corresponding to the second LBA of the single zone.

In operation S930, the storage device 200 may provide LBA change information including the first LBA and the second LBA to the host 100. In certain embodiments, the storage device 200 may provide the LBA change information to the host 100 based on the first write data being written in the area corresponding to the second LBA of the single zone. However, embodiments are not limited thereto. In certain embodiments, the storage device 200 may provide the LBA change information to the host 100 when it is determined that the difference between the first LBA and the second LBA is within the predetermined range.

When it is determined that the difference between the first LBA and the second LBA is outside the predetermined range, the storage device 200 may transmit an unaligned write error message to the host 100 without writing the first write data in the area corresponding to the second LBA of the single zone.

When subsequently performing a read operation on the first write data, the host 100 may use the LBA change information. The LBA change information may indicate that the first LBA has been changed to the second LBA. For example, the LBA change information may indicate that the first write data is stored at the second LBA instead of the first LBA. Accordingly, the host 100 may perform the read operation on the first write data by transmitting a read command including the second LBA to the storage device 200 based on the LBA change information.

In certain embodiments, the device driver 120 of the host 100 may generate a redirection map 121 , in which the first LBA is mapped to the second LBA, based on the LBA change information. Accordingly, even when the file system 110 of the host 100 issues a first read request including the first LBA for the read operation of the first write data, the device driver 120 may transmit a first read command including the second LBA to the storage device 200 based on the redirection map. The first write data is stored in the area corresponding to the second LBA of the single zone in operation S920, the storage device 200 may provide the first write data to the host 100 in response to the first read command including the second LBA.

In certain embodiments, the host 100 may integrate the redirection map, generated and managed by the device driver 120, into the file system 110. Accordingly, the mapping information of the redirection map 121 may be reflected in the LBA allocation table of the file system 110. For a read operation of the first write data, the file system 110 may issue a first read request including the second LBA rather than issuing a first read request including the first LBA. As a result, the device driver 120 may transmit a first read command including the second LBA to the storage device 200. When the redirection map 121 of the device driver 120 is integrated into the file system 110, the redirection map 121 may be deleted from the device driver 120.

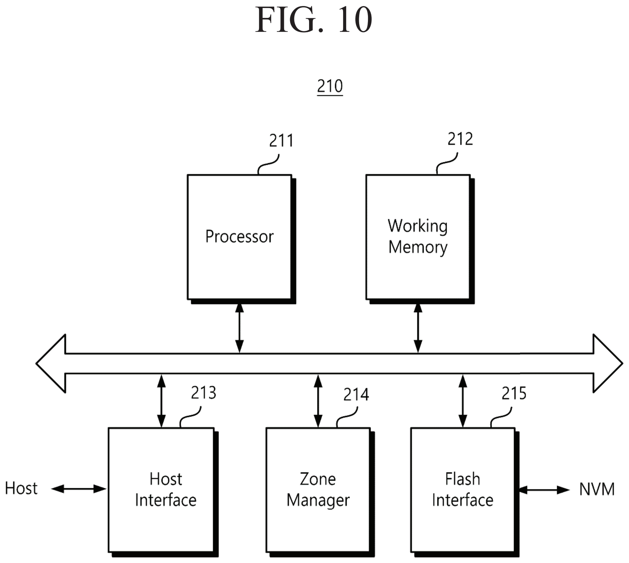

FIG. 10 is a block diagram illustrating the configuration of a memory controller according to one or more embodiments. The memory controller 210 of FIG. 10 may correspond to the memory controller 210 of FIG. 8. Referring to FIG. 10, the memory controller 210 may include a processor 211, a working memory 212, a host interface 213, a zone manager 214, and a flash interface 215.

The processor 211 may include a central processing unit (CPU) or a microprocessor. The processor may execute firmware running on the memory controller. For example, the processor 211 may execute various types of firmware or software loaded into the working memory 212. Additionally, the processor 211 may execute firmware or software responsible for core functions of the storage device 200, such as the host interface layer (HIL) or the flash translation layer (FTL).

Software (or firmware) or data for controlling the memory controller 210 may be loaded into the working memory 212. The software and data loaded into the working memory 212 may be executed or processed by the processor 211. For example, the flash translation layer (FTL, not illustrated) executed by the processor 211 may perform functions such as logical-to-physical (L2P) address mapping, garbage collection, or wear leveling.

The working memory 212 may include a volatile memory such as a static random access memory (SRAM), a dynamic RAM (DRAM), or a synchronous DRAM (SDRAM), and/or a non-volatile memory such as a flash memory, a phase-change RAM (PRAM), a magneto-resistive RAM (MRAM), a resistive RAM (ReRAM), or a ferroelectric RAM (FRAM).

The host interface 213 may provide an interface between the memory controller 210 and the host 100. The host and the memory controller may be connected through one of various standardized interfaces. The standard interfaces may include, for example, Advanced Technology Attachment (ATA), Serial ATA (SATA), external SATA (e-SATA), Small Computer System Interface (SCSI), Serial Attached SCSI (SAS), Peripheral Component Interconnection (PCI), PCI Express (PCIe), Universal Serial Bus (USB), IEEE 1394, Universal Flash Storage (UFS), embedded Multi-Media Card (eMMC), or Non-Volatile Memory Express (NVMe).

In certain embodiments, the memory controller 210 may transmit the above-described LBA change information or unaligned write error message to the host 100 through the host interface 213.

The zone manager 214 may support operations of the storage device 200 related to zoned namespaces (ZNS). For example, the zone manager 214 may dynamically create or delete namespaces or a plurality of zones in response to a request from the host. In addition, the zone manager 214 may manage a state (for example, an active state or an inactive state) of each of the plurality of zones. In addition, the zone manager may control various operations related to the plurality of zones.

In certain embodiments, the zone manager 214 may manage a write pointer WP indicating the next LBA at which data is to be sequentially written in an active zone.

The zone manager 214 may check whether the LBA included in a write command matches the LBA indicated by the write pointer WP. When the LBAs do not match, for example, when a situation corresponding to an unaligned write error occurs, the zone manager 214 may write the write data in an area corresponding to the LBA indicated by the write pointer WP and provide LBA change information to the host 100.

In certain embodiments, the zone manager 214 may check whether the difference between the LBA included in the write command and the LBA indicated by the write pointer (WP) is within a predetermined range based on the I/O queue depth of the storage device 200. When the difference is within the predetermined range, the zone manager 214 may write the write data in the area corresponding to the LBA indicated by the write pointer WP and provide LBA change information to the host 100. When the difference is outside the predetermined range, the zone manager 214 may transmit an unaligned write error message to the host 100.

The flash interface 215 may provide an interface between the memory controller 210 and the non-volatile memory 220. The memory controller 210 may transmit commands or data to the non-volatile memory 220 through the flash interface 215 or receive data from the non-volatile memory 220 through the flash interface 215.

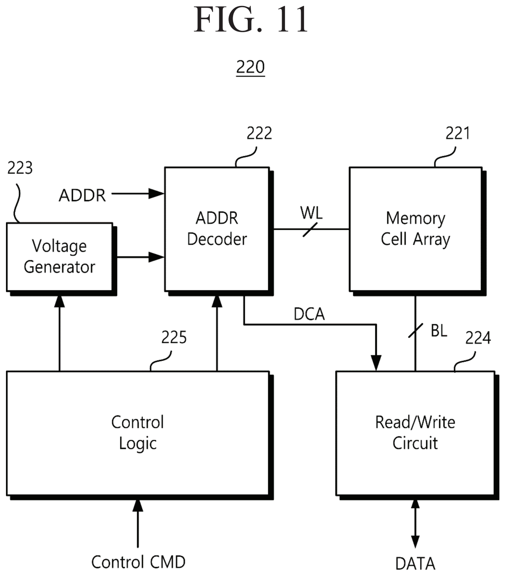

FIG. 11 is a block diagram illustrating the configuration of a non-volatile memory according to an embodiment of the present invention. A non-volatile memory 220 of FIG. 11 may be an implementation example of the non-volatile memory 220 of FIG. 8, but embodiments are not limited thereto.

Referring to FIG. 11, the non-volatile memory 220 may include a memory cell array 221, an address decoder 222, a voltage generator 223, a read/write circuit 224, a control logic 225, or the like.

The memory cell array 221 may be connected to the address decoder 222 through wordlines WL. The memory cell array 221 may be connected to the read/write circuit 224 through bitlines BL. The memory cell array 221 may include a plurality of memory cells. For example, memory cells arranged in a row direction may be connected to a wordline WL. For example, memory cells arranged in a column direction may be connected to a bitline BL.

The plurality of memory cells may constitute a plurality of pages or a plurality of memory blocks. In certain embodiments, at least some of the plurality of memory blocks may be logically mapped to LBAs corresponding to each of a plurality of zones. Alternatively, in certain embodiments, at least a portion of the plurality of pages may be logically mapped to LBAs corresponding to each of a plurality of zones.

The address decoder 222 may be connected to the memory cell array 221 through wordlines WL. The address decoder may operate in response to the control of the control logic. The address decoder 222 may receive an address ADDR from the memory controller 210. The address decoder 222 may receive voltages necessary for operations, such as a program operation, a read operation, or an erase operation, from the voltage generator 223.

The address decoder 222 may decode a row address among the received addresses ADDR. The address decoder 222 may select a wordline WL using the decoded row address. A decoded column address DCA may be provided to the read/write circuit 224. For example, the address decoder may include a row decoder, a column decoder, an address buffer, or the like.

The voltage generator 223 may generate voltages necessary for access operations under the control of the control logic 225. For example, the voltage generator 223 may generate a program voltage and a program verify voltage required to perform a program operation. For example, the voltage generator 223 may generate a read voltage required to perform a read operation and an erase voltage and an erase verify voltage required to perform an erase operation. Additionally, the voltage generator 223 may provide a voltage required to perform each operation to the address decoder 222.

The read/write circuit 224 may be connected to the memory cell array 221 through bitlines BL. The read/write circuit 224 may exchange data DATA with the memory controller 210. The read/write circuit 224 may operate in response to the control of the control logic 225. The read/write circuit 224 may receive a decoded column address DCA from the address decoder 222. The read/write circuit 224 may select a bitline BL using the decoded column address DCA.

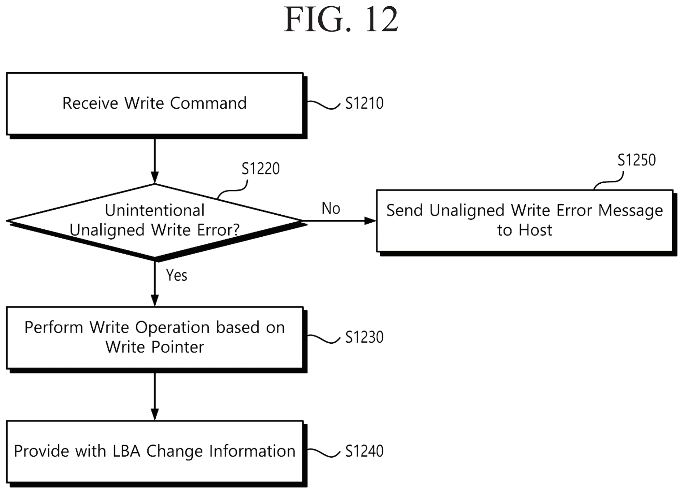

FIG. 12 is a flowchart illustrating a method of operating a storage device according to one or more embodiments. Redundant descriptions related to FIG. 12, overlapping the foregoing descriptions, will be omitted or simplified.

Referring to FIG. 12, in operation S1210, the storage device 200 may receive a write command from the host 100. The write command may involve writing write data in an area of a zone corresponding to a write LBA.

In operation S1220, the storage device 200 may determine whether an unintentional unaligned write error has occurred. For example, the storage device 200 may determine that an unintentional unaligned write error has occurred when the write LBA included in the write command does not match the LBA indicated by the write pointer WP and the difference is within a predetermined range based on the I/O queue depth.

When it is determined that an unintentional unaligned write error has occurred in operation S1220 (Yes), the flow proceeds to operation S1230 in which the storage device 200 may perform a write operation on the write data based on the write pointer WP. For example, the storage device 200 may write the write data in the LBA indicated by the write pointer WP instead of the write LBA included in the write command.

In operation S1240, the storage device 200 may provide LBA change information to the host 100. In certain embodiments, the LBA change information may have a form in which the write LBA included in the write command is mapped to the LBA indicated by the write pointer WP.

In operation S1220, the storage device 200 may determine that an unintentional unaligned write error has not occurred in operation S1220 (No). For example, when the write LBA included in the write command does not match the LBA indicated by the write pointer WP, and the difference between the write LBA and the LBA indicated by the write pointer WP is outside a predetermined range based on the I/O queue depth, the storage device 200 may determine that an unintentional unaligned write error has not occurred. The flow proceeds to operation S1250 in which the storage device 200 may transmit an unaligned write error message to the host 100.

FIG. 13 is a block diagram illustrating the configuration of a host according to one or more embodiments. Redundant descriptions related to FIG. 13, overlapping the foregoing descriptions, will be omitted or simplified.

Referring to FIG. 13, a host 100 may include a file system 110, a device driver 120, a storage interface 130, a processor 140, and a host memory 150.

The processor 140 may control the overall operation of the host 100. The processor 140 may execute various types of software loaded into the host memory 150. For example, the processor 140 may execute an operating system OS and application programs. In certain embodiments, the processor may be provided as a homogeneous multi-core processor or a heterogeneous multi-core processor.

The host memory 150 may be used as a main memory or a cache memory. In addition, the host memory 150 may be used as a driving memory for running software or firmware. Application programs or data to be processed by the processor 140 may be loaded into the host memory 150. For example, the file system 110, the device driver 120, and the application programs may be loaded into the host memory 150.

The file system 110 may manage file and folder structure for the storage device 200 including a non-volatile memory NVM. The file system 110 may issue write requests or read requests to the device driver 120 to access the NVM. The file system 110 may provide a logical address (for example, LBA) corresponding to the write request or read request to the device driver 120. To this end, the file system 110 may include an LBA allocation table 111. The LBA allocation table 111 may indicate logical addresses allocated to files stored in the NVM.

The device driver 120 may control the storage device 200. The device driver 120 may modify a format of various requests and logical addresses issued by the file system and transmit the various requests and logical addresses to the storage device 200. In addition, the device driver 120 may modify the format of data corresponding to various requests and transmit the data to the storage device. The device driver 120 may support Zoned Namespaces (ZNS) according to standards such as Non-Volatile Memory Express (NVMe), Universal Flash Storage (UFS), or Zoned Block Commands (ZBC).

In certain embodiments, the device driver 120 may generate a redirection map 121 based on the LBA change information provided by the storage device. The redirection map 121 may include mapping information for changing an LBA provided by the file system based on the LBA allocation table to an LBA changed based on the write pointer WP.

When a read request including an LBA based on the LBA allocation table is issued by the file system 110,the device driver 120 may check whether the LBA included in the issued read request is present in the redirection map. In certain embodiments, the device driver 120 may use a filter to check whether the LBA included in the read request is present in the redirection map. To this end, the device driver 120 may include an LBA filter that outputs, as a result, whether an input LBA is present in the redirection map 121 when an LBA is input.

The device driver 120 may check whether the LBA included in a read request issued by the file system is present in the redirection map. When the LBA is present in the redirection map, the device driver 120 may change the LBA included in a read request of the file system 110 based on the redirection map 121 and transmit a read command including the changed LBA to the storage device 200. When the LBA included in the read request of the file system 110 is not present in the redirection map, the device driver 120 may transmit a read command including the LBA from the read request of the file system 110 to the storage device 200.

In certain embodiments, the host 100 may integrate the redirection map 121 into the file system 110. The redirection map 121 and/or the LBA filter 122 may be deleted from the device driver 120. Additionally, the device driver 120 may transmit a read command including the LBA included in the read request of the file system 110 to the storage device 200.

The storage interface 130 may provide an interface between the storage device 200 and the host 100. For example, the storage interface 130 may include the above-described host interface 213. In certain embodiments, the device driver 120 may receive the above-described LBA change information or unaligned write error message from the storage device 200 through the storage interface 130.

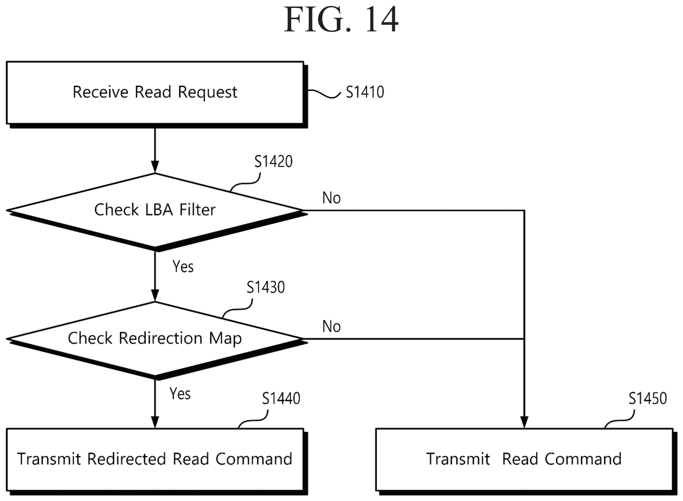

FIG. 14 is a flowchart illustrating the operation of a device driver 120 according to one or more embodiments. Redundant descriptions related to FIG. 14, overlapping the foregoing descriptions, will be omitted or simplified.

Referring to FIG. 14, in operation S1410, the device driver 120 may receive a read request from the file system 110. The read request may include an LBA based on the LBA allocation table 111.

In operation S1420, the device driver 120 may check the LBA filter 122. The LBA filter 122 may output whether the input LBA exists in the redirection map 121. The LBA filter 122 may be implemented as a Bloom filter 122, but embodiments are not limited thereto.

When the LBA filter 122 indicates that the LBA included in the read request is present in the redirection map in operation S1420 (Yes), the flow proceeds to operation S1430 in which the device driver 120 may check the LBA mapped to the LBA, included in the read request, in the redirection map 121.

When the LBA mapped to the LBA included in the read request is present in the redirection map in operation S1430 (Yes), the flow proceeds to operation S1440 in which the device driver 120 may transmit a read command including the mapped LBA to the storage device 200.

When the LBA filter 122 indicates that the LBA included in the read request is not present in the redirection map in operation S1420 (No) or when an output of the LBA filter 122 indicates that the mapped LBA is present in the redirection map but the mapped LBA is not present in the redirection map in operation S1430 (No), the device driver 120 may transmit a read command to the storage device 200 including the LBA from the read request transmitted by the file system 110 without change.

FIG. 14 illustrates an example in which the device driver 120 includes an LBA filter 122, but embodiments are not limited thereto. In certain embodiments, the device driver 120 may not include an LBA filter 122. In this case, the device driver 120 may operate without performing operation S1420.

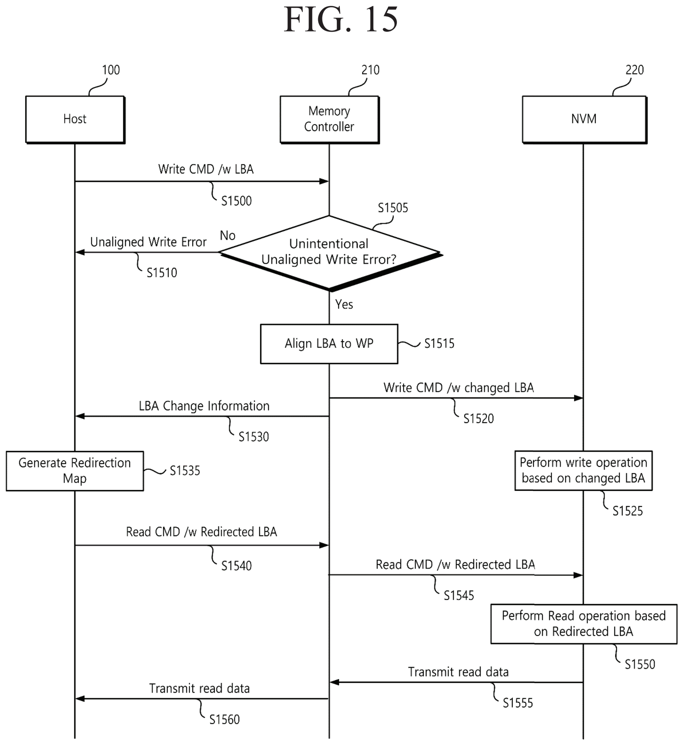

FIG. 15 is a process diagram illustrating a method of operating a storage system according to one or more embodiments. Redundant descriptions related to FIG. 15, overlapping the foregoing descriptions, will be omitted or simplified.

Referring to FIG. 15, in operation S1500, the host 100 may transmit a write command including an LBA and write data to the memory controller 210. The LBA may be a single LBA selected from among LBAs corresponding to one of a plurality of zones.

In operation S1505,the memory controller 210 may determine whether an unintentional unaligned write error has occurred.

For example, the memory controller 210 may check whether the LBA included in the write command matches the LBA indicated by the write pointer WP corresponding to the selected zone.

When the LBAs do not match, a situation corresponding to an unaligned write error occurs. When an unaligned write error situation occurs, the memory controller 210 may determine whether the situation is due to an unintentional unaligned write error. For example, when the situation occurs due to the unaligned write error, the memory controller 210 may check whether a difference between the LBAs is within a predetermined range based on an I/O queue depth.

When the difference between the LBAs is outside the predetermined range, the memory controller 210 may determine that an unintentional unaligned write error has not occurred in operation S1505 (No). Then, the flow proceeds to operation S1510 in which the memory controller 210 may transmit an unaligned write error message to the host 100.

When the difference between the LBAs is within the predetermined range, the memory controller 210 may determine that an unintentional unaligned write error has occurred in operation S1505 (Yes). Then, the flow proceeds to operation S1515 in which the memory controller 210 may align the LBA included in the write command based on the LBA indicated by a write pointer WP. In operation S1520,the memory controller 210 may transmit a write command including the changed LBA to a non-volatile memory. The write data may also be transmitted to the non-volatile memory. Accordingly, in operation S1525, the non-volatile memory 220 that has received the write command and the changed LBA from the memory controller 210 may perform a write operation on the write data based on the changed LBA.

When the LBA included in the write command matches the LBA indicated by the write pointer WP corresponding to the selected zone, it is not a situation corresponding to an unaligned write error. Although not illustrated in the drawing, the memory controller 210 may transmit the write command to the non-volatile memory 220 without changing the LBA included in the write command. Then, the non-volatile memory 220 may perform a write operation on the write data based on the LBA included in the write command.

In operation S1530, the memory controller 210 may transmit LBA change information to the host 100. The LBA change information may include information on the LBA included in the write command and the changed LBA. Accordingly, in operation S1535, the host 100 may generate a redirection map 121 based on the LBA change information.

In operation S1540, the host 100 may transmit a read command to the memory controller 210 to read the write data stored in the non-volatile memory 220 based on the changed LBA. The host 100 may transmit a read command including the redirected LBA to the memory controller 210 based on the redirection map 121.

For example, unless the redirection map is integrated into the file system 110, the file system 110 of the host 100 is unaware that the write data is stored in the area of the non-volatile memory corresponding to the changed LBA. Accordingly, the file system 110 may issue a read request including the same LBA as the LBA included in the write command transmitted in operation S1500 to read the write data. The device driver 120 of the host 100 may change the LBA included in the read request to the changed LBA based on the redirection map 121 and transmit a read command including the changed LBA to the memory controller 210. The changed LBA may be the redirected LBA.

In operation S1545, the memory controller 210 may transmit a read command including the redirected LBA to the non-volatile memory 220. Accordingly, in operation S1550, the non-volatile memory 220 may perform a read operation based on the redirected LBA. The write data is stored in an area corresponding to the redirected LBA, so that the non-volatile memory 220 may obtain the write data as read data.

In operation S1555, the non-volatile memory 220 may transmit the read data to the memory controller 210. In operation S1560,the memory controller 210 may transmit the read data to the host 100.

FIG. 15 illustrates an example in which operation S1530 is performed later than operation S1520, but embodiments are not limited thereto. In certain embodiments, operation S1530 may be performed before operation S1520.

According to the above-described embodiments, the overhead for handling unaligned write errors may be reduced. As a result, a storage system, a method of operating the storage system, and a storage device, each having improved performance, may be provided.

Various embodiments may be implemented as software including commands stored in a machine-readable storage media that can be read by machines (for example, computers). The machines refer to apparatuses that are capable of calling instructions stored in storage media and can operate based on the called instructions, and may include the host 100 or the storage device 200 according to the above-described embodiments.

When an instruction is executed by a processor, the processor may perform a function corresponding to the instruction by itself, or by using other components under the control of the processor. An instruction may include a code generated or executed by a compiler or an interpreter. A storage medium that is readable by machines may be provided in the form of a non-transitory storage medium. The term "non-transitory" only means that a storage medium does not include signals, and is tangible, but does not indicate whether data is stored in the storage medium semi-permanently or temporarily.

In certain embodiments, the method according to the above-described various embodiments may be provided as included in a computer program product. The computer program product may be traded between sellers and buyers as a commodity. The computer program product may be distributed in the form of a machine-readable storage medium, or online through an application store. In the case of online distribution, at least a part of the computer program product may be temporarily stored or temporarily generated in a storage medium such as a memory of a manufacturer's server, a server of an application store, or a relay server.

As set forth above, according to the above-described embodiments, the overhead for handling unaligned write errors may be reduced. The overhead for handling unaligned write errors may be reduced. As a result, a storage system, a method of operating the storage system, and a storage device, each having improved performance, may be provided.

While various embodiments have been shown and described above, it will be apparent to those skilled in the art that modifications and variations could be made without departing from the scope of the present inventive concept as defined by the appended claims.

## Claims

1. A storage system comprising:
a storage device (200) comprising a zone corresponding to a predetermined number of consecutive logical block addresses, LBAs, and requiring sequential writing of data; and
a host (100) configured to transmit a first write command comprising a first LBA, among the predetermined number of LBAs, and first write data to the storage device (200),
wherein:
the storage device (200) is, based on a mismatch between the first LBA of the first write command and a second LBA indicated by a write pointer corresponding to the zone, configured to:
write the first write data to an area of the zone corresponding to the second LBA; and
provide LBA change information comprising the first LBA and the second LBA to the host (100).

2. The storage system of claim 1, wherein:
the storage device (200) is, when a difference between the first LBA and the second LBA is within a predetermined range based on an I/O queue depth of the storage device (200), configured to:
write the first write data in the area of the zone corresponding to the second LBA; and
provide the LBA change information to the host (100).

3. The storage system of claim 2, wherein:
the predetermined range is determined based on a product of the I/O queue depth of the storage device (200) and a maximum number of LBAs corresponding to a single I/O command.

4. The storage system of claim 2 or 3, wherein:
the storage device (200) is, when the difference between the first LBA and the second LBA is outside the predetermined range, configured to:
transmit an unaligned write error message to the host (100) without writing the first write data in the area of the zone corresponding to the second LBA.

5. The storage system of any one of claims 1 to 4, wherein:
the host (100) is configured to perform a read operation on the first write data based on the LBA change information.

6. The storage system of any one of claims 1 to 5, wherein:
the host (100) comprises:
a file system (110) comprising an LBA allocation table (111); and
a device driver (120) configured to control the storage device (200) based on a request issued by the file system (110); and
the device driver (120) is configured to:
generate a redirection map (121), in which the first LBA and the second LBA are mapped, based on the LBA change information; and
transmit a first read command comprising the second LBA to the storage device (200) based on the redirection map (121) when a first read request comprising the first LBA is issued by the file system (110).

7. The storage system of claim 6, wherein:
the redirection map (121) comprises a plurality of LBA pairs mapped to each other; and
the device driver (120) is configured to:
transmit a read command comprising a changed LBA to the storage device (200) based on the redirection map (121) when an LBA included in a read request issued by the file system (110) is present in the redirection map (121); and
transmit a read command comprising an LBA included in the read request to the storage device (200) when the LBA included in the read request is not present in the redirection map (121).

8. The storage system of claim 7, wherein:
the device driver (120) comprises a filter (122) configured to output whether an LBA included in the read request is present in the redirection map (121) when the LBA is input.

9. The storage system of claim 7 or 8, wherein:
the host (100) is configured to:
integrate mapping information of the plurality of LBA pairs included in the redirection map (121) into the LBA allocation table (111) of the file system (110); and
delete the redirection map (121) from the device driver (120).

10. The storage system of claim 1, wherein the storage device (200) is configured to determine whether the mismatch between the first LBA and the second LBA corresponds to an unintentional unaligned write error based on whether a difference between the first LBA and the second LBA is within a predetermined range.

11. A method of operating a storage system comprising a storage device and a host (100), wherein the storage device (200) comprises a zone corresponding to a predetermined number of consecutive logical block addresses, LBAs, and requiring sequential writing of data, the method comprising:
transmitting (S910), by the host (100), a first write command comprising a first LBA and first write data to the storage device (200);
writing (S920), by the storage device (200) and based on a mismatch between the first LBA of the first write command and a second LBA indicated by a write pointer corresponding to the zone, the first write data in an area of the zone corresponding to the second LBA; and
providing (S930) LBA change information comprising the first LBA and the second LBA to the host (100).

12. The method of claim 11, wherein:
the writing of the first write data comprises:
determining whether a difference between the first LBA and the second LBA is within a predetermined range based on an I/O queue depth of the storage device (200); and
writing the first write data in the area of the zone corresponding to the second LBA when the difference is within the predetermined range.

13. The method of claim 12, comprising:
transmitting an unaligned write error message to the host (100) without writing the first write data in the area of the zone corresponding to the second LBA when the difference is outside the predetermined range.

14. The method of claim 12 or 13, wherein:
the predetermined range is determined based on a product of the I/O queue depth of the storage device (200) and a maximum number of LBAs corresponding to a single I/O command.

15. The method of any one of claims 11 to 14, comprising:
performing, by the host (100), a read operation on the first write data based on the LBA change information.
